(19) Europäisches Patentamt
European Patent Office
Office européen des brevets

(11) **EP 4 614 459 A1**

(12) **EUROPEAN PATENT APPLICATION**

(43) Date of publication:
**10.09.2025 Bulletin 2025/37**

(21) Application number: **25154881.4**

(22) Date of filing: **30.01.2025**

(51) International Patent Classification (IPC):
***G06V 10/82*** *(2022.01)*

(52) Cooperative Patent Classification (CPC):
**G06V 10/82**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.03.2024 IL 31128624**

(71) Applicants:
• **FUJITSU LIMITED**
**Kawasaki-shi, Kanagawa 211-8588 (JP)**
• **B.G. NEGEV TECHNOLOGIES AND APPLICATIONS LTD.,**
**at Ben-Gurion University**
**841050 Beer Sheva (IL)**

(72) Inventors:
• **Hofman, Omer**
**841050 Beer Sheva (IL)**
• **Giloni, Amit**
**841050 Beer Sheva (IL)**
• **Elovici, Yuval**
**841050 Beer Sheva (IL)**
• **Shabtai, Asaf**
**841050 Beer Sheva (IL)**
• **Shimizu, Toshiya**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **ABNORMALITY DETECTION PROGRAM, ABNORMALITY DETECTION METHOD, AND INFORMATION PROCESSING DEVICE**

(57) An abnormality detection program causes a computer to execute a process including calculating a first value and a second value, based on a detection result of an object detected from an input scene to an object detection model and a saliency map for the input scene obtained by an XAI technique, the first value indicating a value of the saliency map for the entire input scene, the second value indicating a value of the saliency map in a region other than a region of the detected object in the input scene, and detecting an abnormality in the input scene based on the calculated first and second values.

FIG.5

EP 4 614 459 A1

## Description

FIELD

The embodiments discussed herein are related to an abnormality detection program, an abnormality detection method, and an information processing device.

BACKGROUND

Object detection models (object detector: OD) are known, which in response to input of image data, output the region of an object in the image data and information (for example, label) of the object in the image data. Object detection models are used in various fields, including the retail field and the field of suspicious person detection, to detect various objects in response to input of an input scene which is an example of image data. Examples of object detection models used include those that identify products picked up or purchased by users at retail stores, and those that detect suspicious objects at airports.

The input scene to such an object detection model may contain an abnormality. This "abnormality" may be caused by an attacker putting an adversarial patch deliberately, or it may occur naturally by object hiding another object or an unrecognized object.

Detecting deliberate patch attacks, can be done for example by using training data containing an adversarial patch to perform training such that a scene containing an adversarial patch is classified into a new class (adversarial class) indicating that an attack has occurred, thereby detecting the presence/absence of an

Non Patent Document 1: Ji, N., Feng, Y., Xie, H., Xiang, X., and Liu, "Adversarial YOLO: Defense Human Detection Patch Attacks via Detecting Adversarial Patches" 2021, arXiv preprint arXiv: 2103.08860.

However, in the current situation where specialized algorithms are designed for each individual type of abnormalities, it is difficult to detect an abnormality other than the targeted types. On the other hand, in practical applications in various fields such as retail and suspicious person detection, the type of abnormality contained in an input scene to an object detection model is often unknown. The above technologies therefore have room for improvement in terms of detecting any type of abnormality.

An object in one aspect of an embodiment is to provide a computer-readable recording medium, an abnormality detection method, and an information processing device capable of detecting any type of abnormality.

SUMMARY

According to an aspect of an embodiment, an abnormality detection program causes a computer to execute a process including calculating a first value and a second value, based on a detection result of an object detected from an input scene to an object detection model and a saliency map for the input scene obtained by an XAI technique, the first value indicating a value of the saliency map for the entire input scene, the second value indicating a value of the saliency map in a region other than a region of the detected object in the input scene, and detecting an abnormality in the input scene based on the calculated first and second values.

According to an aspect of an embodiment, it is possible to detect any type of abnormality.

BRIEF DESCRIPTION OF DRAWINGS

FIG. 1 is a diagram illustrating a system configuration example;
FIG. 2 is a schematic diagram illustrating one aspect of a problem-solving approach;
FIG. 3 is a block diagram illustrating a functional configuration example of a server device;
FIG. 4 is a schematic diagram illustrating an example of object detection;
FIG. 5 is a schematic diagram illustrating an example of saliency map generation;
FIG. 6 is a schematic diagram (1) illustrating an example of DiL score calculation;
FIG. 7 is a schematic diagram (2) illustrating an example of DiL score calculation;
FIG. 8 is a schematic diagram (3) illustrating an example of DiL score calculation;
FIG. 9 is a schematic diagram (4) illustrating an example of DiL score calculation;
FIG. 10 is a flowchart illustrating an abnormality detection process; and
FIG. 11 is a diagram illustrating a hardware configuration example.

DESCRIPTION OF EMBODIMENTS

Preferred embodiments will be explained with reference to accompanying drawings. The embodiments only describe one example or aspect by way of illustration, and such illustration is not intended to limit structures, actions, functions, properties, characteristics, methods, applications, and the like according to the present disclosure.

First Embodiment

Overall Configuration

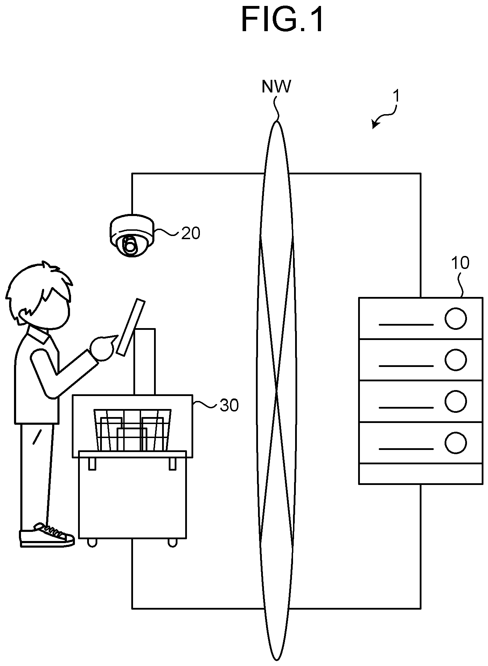

FIG. 1 is a diagram illustrating a system configuration example. FIG. 1 illustrates, as an exemplary use case, an example in which an abnormality detection function of detecting an abnormality contained in an input scene to an object detection model is applied to an automatic checkout system 1 for stores such as supermarkets and convenience stores. As used herein "automatic checkout system" may be referred to as "self-checkout system".

In the following, an example in which the above abnormality detection function is packaged and provided with the automatic checkout service will be described by way of illustration. The above abnormality detection function may be provided independently of the above automatic checkout service. In this case, the automatic checkout service and the abnormality detection function may be provided by different hardware resources, for example, physical devices and physical elements.

As illustrated in FIG. 1, the automatic checkout system 1 can include a server device 10, a camera 20, and a self-checkout register 30. Although FIG. 1 illustrates the camera 20 and the self-checkout register 30 as components of the automatic checkout system 1, other devices, such as terminal devices used by store personnel, may also be included.

These server device 10, camera 20, and self-checkout register 30 may be connected via a network NW. For example, the network NW may be either wired or wireless and implemented by any technology, such as an intranet, the Internet, or a power-saving wireless communication standard for the Internet of things (IoT). The network NW is not necessarily a single network and may include multiple networks in which an intranet and the Internet are connected via a gateway or the like.

The server device 10 is an example of an information processing device that provides the above abnormality detection function. For example, the server device 10 can be implemented as an application that is software as a service (SaaS) based to provide the above abnormality detection function as a cloud service. Alternatively, the server device 10 can be implemented as a web server that provides the above abnormality detection function on the premises.

The camera 20 is an example of an imaging device that captures videos. For example, the camera 20 is installed to be able to take a picture of a specific range within a store 3, for example, an area that includes the self-checkout register 30 in the checkout corner. With this configuration, for example, a composition in which a user at the store pays at the self-checkout register 30 can be taken.

The video data thus captured by the camera 20 may be transmitted to the server device 10. For example, the video data may include a plurality of image frames captured by the camera 20 in chronological order. A frame number corresponding to the ascending chronological order is added to each of the image frames. Such an image frame corresponds to each of the still images (frames) included in moving images captured by the camera 20 and can be equivalent to an example of an input scene to an object detection model described above.

The self-checkout register 30 is an example of an accounting machine with which users who purchase products register and settle (pay) for the purchased products by themselves. The self-checkout register 30 is called "self checkout", "automated checkout", "self-checkout machine", "self-checkout register", or the like.

One Aspect of Problem

As explained in the section of BACKGROUND, in practical applications in various fields such as retail and suspicious person detection, the type of abnormality contained in an input scene to an object detection model is often unknown.

In one aspect, "abnormality" may occur naturally due to "partial occlusion" or "out-of-distribution". As used herein "partial occlusion" may refer to a phenomenon in which an object in the foreground of a camera subject partially hides an object behind. The term "out-of-distribution" may refer to a phenomenon in which an object serving as a subject belongs to a class of domains that falls outside the distribution of a training dataset of an object detection model. In another aspect, "abnormality" may be caused deliberately by an attacker putting an adversarial patch in a physical or digital space.

In an aspect, system robustness can be acquired only after any type of abnormality, including these types such as partial occlusion, out-of-distribution, and adversarial patches, can be detected.

However, in the current situation where specialized algorithms are designed for each individual type of targeted abnormalities, it is difficult to detect an abnormality other than the targeted types. For example, an algorithm specialized for detecting patch attacks fails to evaluate the effect of a naturally occurring abnormality on the decision-making process of object detection models. On the other hand, an algorithm specialized for partial occlusion fails to evaluate the effect of patch attacks on the decision-making process of object detection models.

One Aspect of Problem-Solving Approach

The abnormality detection function according to the present embodiment therefore implements measurement of the inconsistency between an intermediate stage and a final stage of a pipeline that implements a machine learning task of object detection, from an aspect of quantitatively interpreting the effect of any type of abnormality on the decision-making process of object detection models.

Here, the measurement of the inconsistency is based on the point of view that when an input scene contains an abnormality, the decision-making process of object detection models becomes unstable and the instability is reflected in the presence and absence of objects throughout the entire pipeline of the object detection model.

Based on this point of view, the "perception" of the intermediate stage of the pipeline of the object detection model and the "perception" of the final stage of the pipeline of the object detection model are measured.

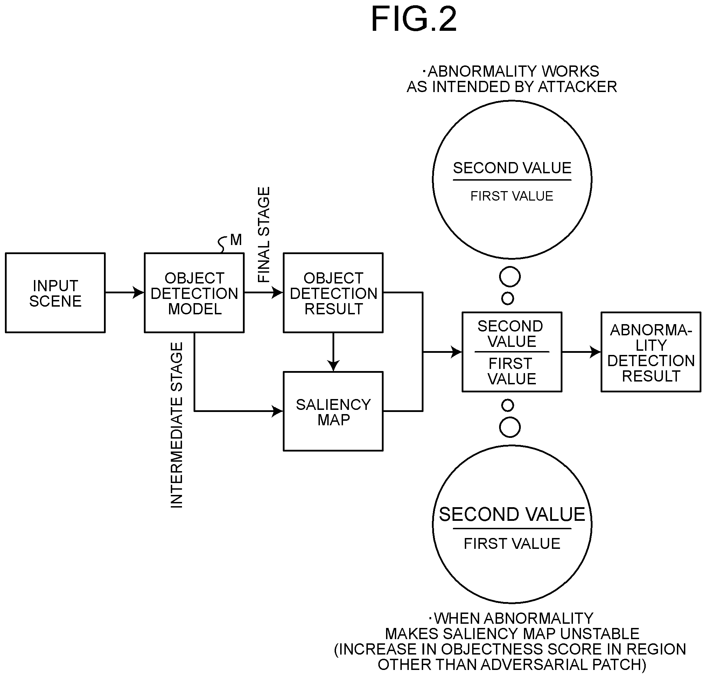

FIG. 2 is a schematic diagram illustrating one aspect of a problem-solving approach. As illustrated in FIG. 2, as an example of the "perception" of the intermediate stage, a saliency map generated by explainable AI (XAI) technique may be acquired. This saliency map maps a score that quantifies the objectness of an input scene, for example, the likelihood that an object is present. On the other hand, as an example of "perception" of the final stage, an object detection result (prediction result) output by the object detection model, such as bounding box, may be acquired.

For example, a first value and a second value are derived from the saliency map, as an example of indexes used to measure the inconsistency between the intermediate stage and the final stage. For example, as an example of the "first value", an index (complete localization: CL) can be calculated which is a localized value of the saliency map corresponding to the entire input scene. As an example of the "second value", an index (background localization: BL) can be calculated which is a localized value of the saliency map corresponding to the outside of a prediction result, for example, a bounding box, output by the object detection model in the input scene.

These first and second values can be used to quantify the effect of any type of abnormality on the decision-making process of object detection models.

Here, in FIG. 2, as an example of an index (distinctive localization: DiL) that quantifies the effect of any type of abnormality on the decision-making process of object detection models, a third value, for example, the ratio of the first value and the second value is given. Furthermore, FIG. 2 illustrates an example of an deliberate abnormality type case in which a disappearance attack is executed by an adversarial patch that place on an object in an input scene to cause false recognition that this real object in the input scene did not exist.

In one aspect, when the disappearance attack works as intended by the attacker, the object disappears due to the adversarial patch. In this case, in the saliency map, the objectness score mapped to the saliency map is decreased by the amount of the object erased by the adversarial patch. The effect of this decrease in the objectness score appears as a decrease in the first value. This decrease in the first value corresponding to the denominator that defines the third value increases the third value.

In another aspect, when the disappearance attack makes the saliency map unstable, the adversarial patch attempts to lower the objectness score in a region corresponding to the position of the adversarial patch. As a result, the objectness score in a region other than the region of the adversarial patch in the input scene may accidentally increase. In this case, the first value does not necessarily decrease. On the other hand, even if the adversarial patch succeeds in false recognition of an object, the adversarial patch is unable to decrease the objectness score of the object that it attempts to erase, so the objectness score remains. The effect of the thus remaining objectness score appears as an increase in the second value. This increase in the second value corresponding to the numerator that defines the third value increases the third value.

In this way, the third value increases both when the disappearance attack works as intended by the attacker and when the disappearance attack makes the saliency map unstable. Thus, the effect of the abnormality caused by the disappearance attack on the decision-making process of object detection models can be quantitatively interpreted.

Although FIG. 1 illustrates the adversarial patch in the disappearance attack by way of example, the effect of the abnormality caused by partial occlusions or OODs. In addition, the effect of not only the abnormality deliberately caused by an adversarial patch but also the abnormality occurring naturally on the decision-making process of object detection models can be quantitatively interpreted.

The abnormality detection function according to the present embodiment therefore can detect any type of abnormality.

Configuration of Server Device 10

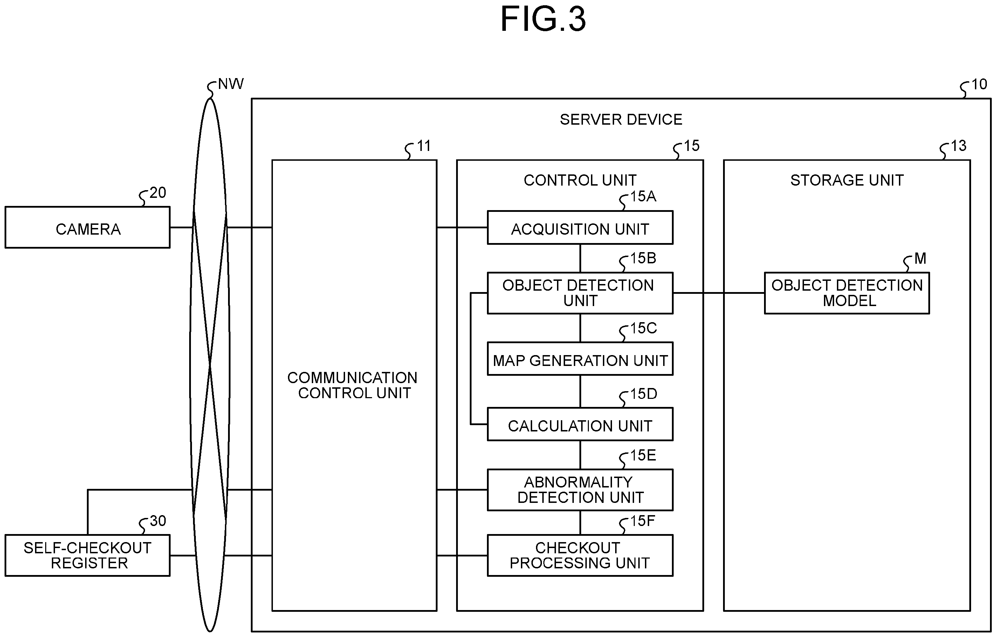

A functional configuration example of the server device 10 according to the present embodiment will now be described. FIG. 3 is a block diagram illustrating a functional configuration example of the server device 10. FIG. 3 schematically depicts the blocks related to the functions corresponding to the automatic checkout service of the server device 10.

As illustrated in FIG. 3, the server device 10 includes a communication control unit 11, a storage unit 13, and a control unit 15. FIG. 3 only depicts the functional units related to the functions corresponding to the automatic checkout service described above, and the server device 10 may include functional units other than those depicted in the drawing.

The communication control unit 11 is a functional unit that controls communication with other devices such as the camera 20 and the self-checkout register 30. For example, the communication control unit 11 may be implemented by a network interface card. In one aspect, the communication control unit 11 accepts video data from the camera 20. In another aspect, the communication control unit 11 accepts various requests related to the automatic checkout service from the self-checkout register 30 and outputs the processing results by the control unit 15 for various requests to the self-checkout register 30.

The storage unit 13 is a functional unit that stores various data. For example, the storage unit 13 may be implemented by an internal, external or auxiliary storage of the server device 10. For example, the storage unit 13 stores information such as an object detection model M.

The object detection model M may be a machine learning model that implements an object detection task that receives an image as an input and outputs the position and category of objects in the image. For example, the machine learning model may be implemented by you only look once (YOLO), or faster regions with convolutional neural network (Faster-RCNN) .

To train such a machine learning model, a training dataset of training data can be used, in which an image is associated with a correct label that includes a bounding box indicating the position of an object in the image and a class indicating the category of the object.

In one aspect, in a training phase, the machine learning model can be trained according to a machine learning algorithm, for example, deep learning, using the image as an explanatory variable and the correct label as an objective variable. As a result, a trained machine learning model can be obtained.

In another aspect, in a prediction phase, an input scene is input into the trained machine learning model. The machine learning model receiving the input scene in this way outputs a bounding box, a class, and a confidence level.

Hereinafter, the trained machine learning model that implements the object detection task may be referred to as "object detection model" or "object detector (OD) model".

The control unit 15 is a functional unit that performs overall control of the server device 10. For example, the control unit 15 may be implemented by a hardware processor. As illustrated in FIG. 3, the control unit 15 includes an acquisition unit 15A, an object detection unit 15B, a map generation unit 15C, a calculation unit 15D, an abnormality detection unit 15E, and a checkout processing unit 15F. The control unit 15 may be implemented by hardwired logic or the like.

The acquisition unit 15A is a processing unit that acquires an input scene. According to an embodiment, the acquisition unit 15A can acquire video data from the camera 20 in units of a frame. For example, the acquisition unit 15A may output each of the image frames acquired from the camera 20, as an input scene, to the object detection unit 15B.

The object detection unit 15B is a processing unit that detects an object from an input scene. According to an embodiment, the object detection unit 15B inputs an input scene to the OD model M to acquire an object detection result (prediction result) output by the OD model M.

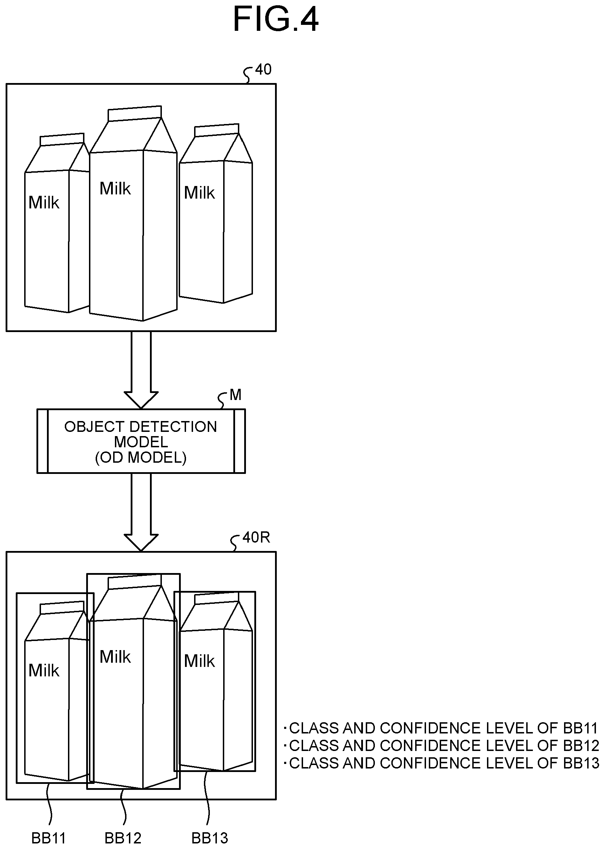

FIG. 4 is a schematic diagram illustrating an example of object detection. As illustrated in FIG. 4, the object detection unit 15B inputs an input scene 40 to the OD model M. The OD model M receiving the input scene 40 in this way outputs an object detection result 40R that includes a bounding box, a class, and a confidence level for each object detected from the input scene 40.

For example, in the example of the object detection result 40R, a "class name" such as Milk and a "confidence level" of 0 to 1 are predicted for each of bounding boxes BB11 to B13 detected from the input scene 40.

The map generation unit 15C is a processing unit that generates a saliency map corresponding to an input scene using the XAI technique. According to an embodiment, the XAI technique can use any saliency map output technique that is compatible with any computer-vision task. Examples include local interpretable model-agnostic explanations (LIME), Shapley additive explanations (SHAP), gradient-weighted class activation mapping (GradCAM), GradCAM++, and FACE.

Here, in an aspect, the method of calculating an objectness score varies according to the type of object detection algorithm used in the OD model M. Based on this aspect, the map generation unit 15C selects an internal component Mo corresponding to the intermediate stage used in the measurement of the inconsistency in the pipeline of the OD model M, according to the type of object detection algorithm in the OD model M.

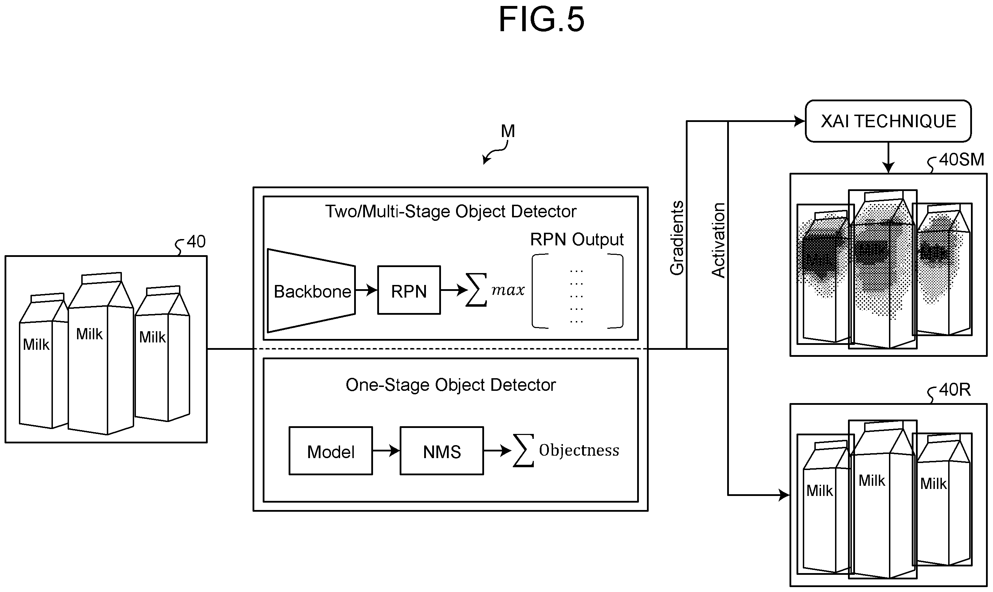

FIG. 5 is a schematic diagram illustrating an example of saliency map generation. As an example, FIG. 5 schematically illustrates how a saliency map 40SE corresponding to the input scene 40 is generated by the XAI technique.

As illustrated in FIG. 5, the type of object detection algorithm in the OD model M can be classified into a one-stage type, which performs region search and class classification simultaneously, and a two-stage type and a multi-stage type, in which a region proposal network is separated.

The one-stage type includes YOLO. In a one-stage type object detection algorithm, an objectness score is computed for each of bounding boxes that can overlap each other, along with the object's class and confidence level. Then, a function called non-maximum suppression (NMS) suppresses the output of a bounding box whose objectness score is not the largest, of the bounding boxes that overlap each other. In such a one-stage type OD model M, the final layer to which NMS has been applied is selected as the internal component Mo.

The two-stage type and multi-stage type include Faster-RCNN and cascade region proposal network (Cascade-RPN). In these two-stage type and multi-stage type OD models M, an objectness score is computed by an RPN component. Hence, the final layer of the RPN component is selected as the internal component Mo.

After the internal component Mo is selected in this way, the map generation unit 15C computes the saliency map for the internal component Mo using a saliency map output technique S that has been user-defined or system defined.

In one aspect, when an activation-based saliency map output technique S is used, the map generation unit 15C inputs, to the saliency map output technique S, an activation MA(x) in processing an input scene x from the first layer of the OD model M to the internal component Mo.

In another aspect, when a gradient-based saliency map output technique S is used, the map generation unit 15C inputs, to the saliency map output technique S, a gradient MV(x) in processing an input scene x from the first layer of the OD model M to the internal component Mo.

As an example, this gradient MV(x) can be computed by back propagating an aggregation of objectness scores in the internal component Mo from the internal component Mo to the input scene x. In the back propagation, the computation corresponding to the type of object detection algorithm in the OD model M can be applied.

In the case of the one-stage type OD model M, the objectness scores generated by the internal component Mo are summed to a single scalar value. On the other hand, in the case of the two-stage type and multi-stage type OD models M, the outputs Mo(x) of the internal component when the input scene x is input to the OD model M are multiple vectors. Each of the vectors corresponds to a region of interest containing a plurality of bounding box candidates. To aggregate the outputs Mo(x) of the internal component into a single scalar value, the bounding box with the highest objectness score among the bounding box candidates is selected, and the objectness scores of the regions are summed. Thus, no region of interest is overlooked in the computation of the gradient MV(x), resulting in gradients that are more indicative for the saliency map output technique S.

In this way, the activation MA (x) or the gradient MV(x) is input to the saliency map output technique S, resulting in a saliency map of the internal component Mo. The saliency map of the internal component Mo is derived as a vector SM(x) that has the same dimensions as the number of pixels in the input scene x and reflects the objectness score of each pixel. For example, in the example illustrated in FIG. 5, a saliency map 40SM is generated. In the saliency map 40SM, darker hatching is assigned to higher objectness scores of the pixels.

The calculation unit 15D is a processing unit that calculates the first value and the second value that are used for measuring the inconsistency between the intermediate stage and the final stage of the OD model M. Hereinafter, a CL value will be given as an example of the first value and a BL value as an example of the second value.

In one aspect, the calculation unit 15D calculates the CL value that is a localized value of the saliency map SM(x) corresponding to the entire input scene x. Such a CL value can be calculated according to the following equation (1) as an example. For example, "$s_i$" in the following equation (1) refers to the $i^{th}$ value in the saliency map SM(x). According to equation (1), the CL value normalized to the numerical range of 0 to 1 can be derived. For example, as the CL value decreases, the input scene x is more likely to be an adversarial example, whereas as the CL value increases, the input scene x is more likely to be a benign example.

$$Complete\ Localization = \frac{\Sigma_{s_i \in SM(x)} s_i}{|SM(x)|} \qquad \cdots (1)$$

In another aspect, the calculation unit 15D calculates the BL value that is a localized value of the saliency map SM(x) corresponding to the outside of the bounding box output by the OD model M in the input scene x. Such a BL value can be calculated according to the following equation (2) as an example. For example, "$s_i$" in the following equation (2) refers to the $i^{th}$ value in the saliency map SM(x). Furthermore, "BGS" in the following equation (2) refers to a set of pixels located outside the bounding box output by the OD model M, that is, pixels corresponding to the background of the object. According to equation (2), the BL value normalized to the numerical range of 0 to 1 can be derived. For example, as the BL value increases, the input scene x is more likely to be an adversarial example, whereas as the BL value decreases, the input scene x is more likely to be a benign example.

$$Background\ Localization = \frac{\sum_{s_i \in SM(x)} \begin{matrix} s_i & if\ s_i \in BGS \\ 0 & otherwise \end{matrix}}{|SM(x)|} \quad \cdots (2)$$

After these CL and BL values are calculated, the calculation unit 15D calculates a DiL score based on the CL and BL values. Such a DiL score can be calculated according to the following equation (3), which finds a deviation of the CL and BL values, as an example. According to equation (3), the DiL score normalized to the numerical range of 0 to 1 can be derived. For example, as the DiL score increases, the input scene x is more likely to be an adversarial example, whereas as the DiL score decreases, the input scene x is more likely to be a benign example.

$$DiL = \frac{Background\ Localization}{Complete\ Localization} = \frac{\sum_{s_i \in SM(x)} \begin{matrix} s_i & if\ s_i \in BS \\ 0 & otherwise \end{matrix}}{\sum_{s_i \in SM(x)} s_i} \quad \cdots (3)$$

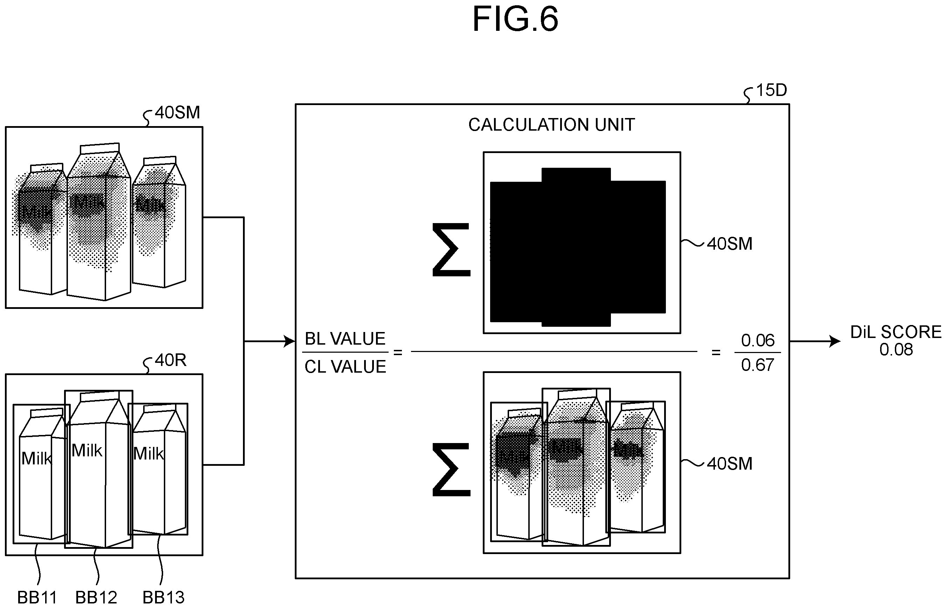

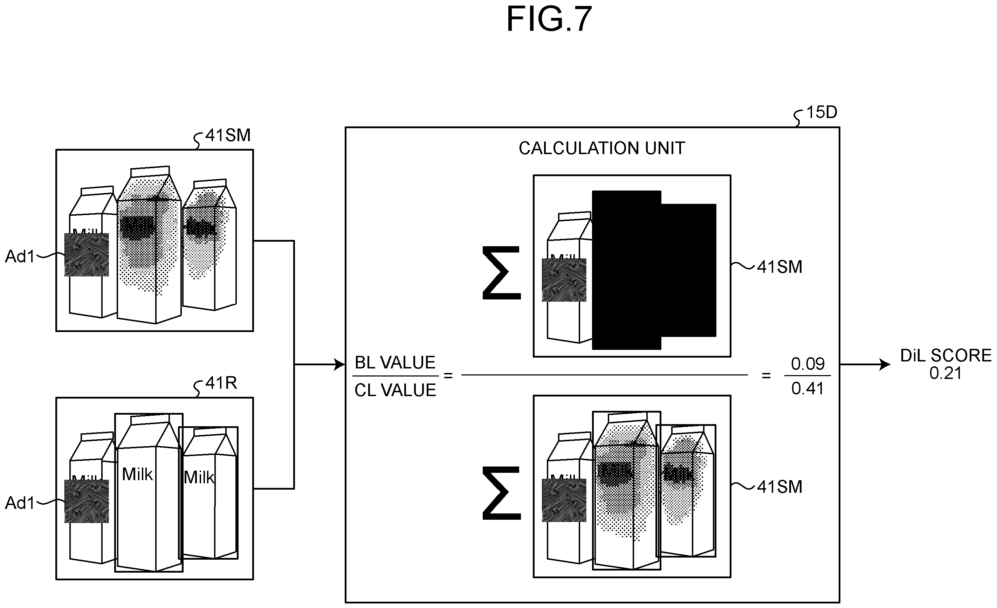

FIG. 6 to FIG. 9 are schematic diagrams (1) to (4) illustrating examples of DiL score calculation. In FIGS. 6 to 9, FIG. 6 illustrates a benign example 40 as an example of the input scene x, while FIGS. 7 to 9 illustrate adversarial examples 41 to 43 containing adversarial patches Ad1 to Ad3 that execute a disappearance attack.

As illustrated in FIGS. 6 to 9, the CL value for each example 40 to 43 can be calculated by summing and normalizing the values of all pixels in the saliency map 40SM to 43SM.

In the case of the benign example 40, the CL value for the benign example 40 is calculated to be "0.67" by summing the objectness scores mapped corresponding to each of three objects as illustrated in the saliency map 40SM in FIG. 6.

In the case of the adversarial example 41, one of three objects is erased by the adversarial patch Ad1 as illustrated in the saliency map 41SM in FIG. 7. Thus, the CL value for the adversarial example 41 is calculated to be "0.41" by summing the objectness scores mapped corresponding to each of the remaining two objects. When the object disappears due to the adversarial patch Ad1 in this way, the CL value of "0.41" for the adversarial example 41 is lower than the CL value of "0.67" for the benign example 40. This clearly indicates that the effect of the disappearance attack by the adversarial patch Ad1 on the decision-making process of the OD model M can be reflected as a decrease in the CL value.

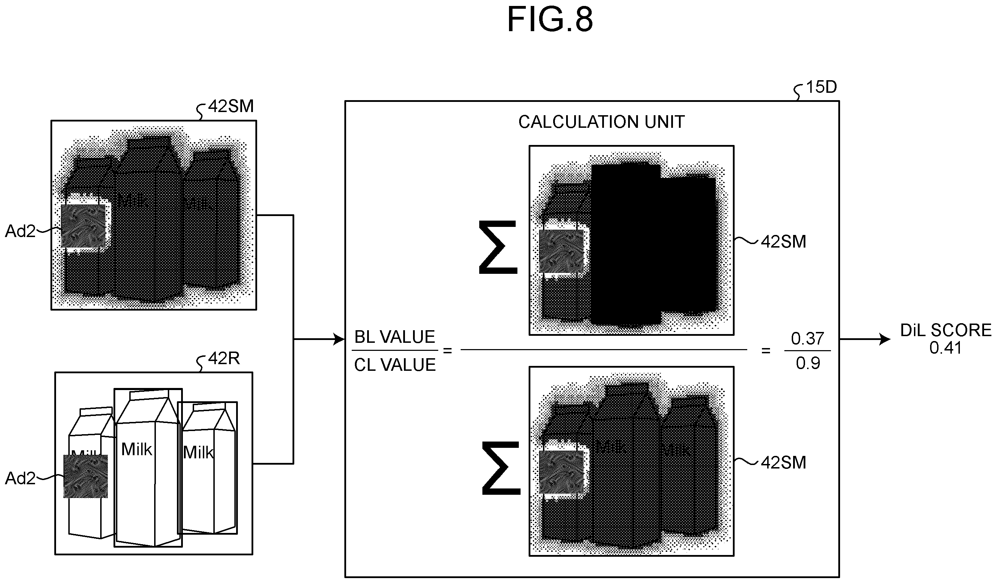

In the case of the adversarial example 42, as illustrated in the saliency map 42SM in FIG. 8, the adversarial patch Ad2 attempts to lower the objectness score of the region corresponding to the position of the adversarial patch Ad2, resulting in an accidental increase in objectness score over a wide range other than the region of the adversarial patch Ad2. The CL value for the adversarial example 42 is calculated to be "0.9" by summing the objectness scores mapped in a wider range.

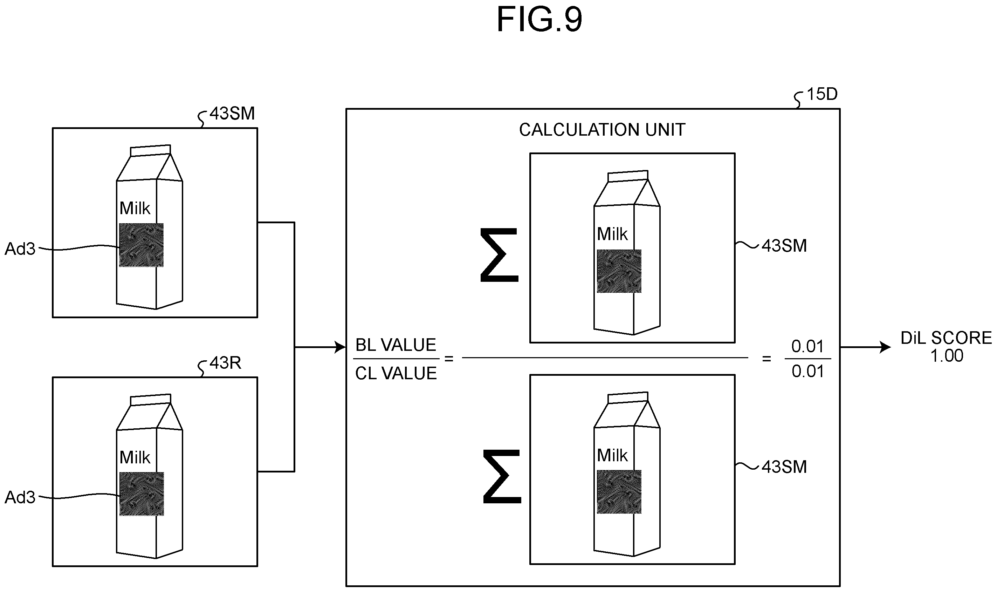

In the case of the adversarial example 43, a complete disappearance attack is accomplished by the adversarial patch Ad3, as illustrated in the saliency map 43SM in FIG. 9. As a result, the objectness score for the entire scene is decreased. As a result, the CL value for the adversarial example 43 is calculated to be "0.01".

On the other hand, the BL value for each example 40 to 41 can be calculated by summing and normalizing the values of pixels outside the region of the bounding box, that is, the black solid section in the saliency maps 40SM to 43SM, as illustrated in FIGS. 6 to 9.

In the case of the benign example 40, the objectness scores masked by the bounding boxes BB11 to BB13 corresponding to three objects are summed, as illustrated in the saliency map 40SM in FIG. 6. As a result, the BL value for the benign example 40 is calculated to be "0.06".

In the case of the adversarial example 41, one of three objects is erased by the adversarial patch Ad1 as illustrated in the saliency map 41SM in FIG. 7. Furthermore, the objectness scores masked by the bounding boxes BB12 and BB13 corresponding to the remaining two objects are summed. As a result, the BL value for the adversarial example 41 is calculated to be "0.09".

In the case of the adversarial example 42, as illustrated in the saliency map 42SM in FIG. 8, the adversarial patch Ad2 attempts to lower the objectness score of the region corresponding to the position of the adversarial patch Ad2, resulting in an accidental increase in objectness score over a wide range other than the region of the adversarial patch Ad2. The mapped objectness scores thus increased in a wider range are partially masked by the bounding boxes BB12 and BB13 corresponds to two objects. However, the objectness score mapped corresponding to the object that the adversarial patch Ad2 attempts to erase has a portion left without being lowered outside the region of the adversarial patch Ad2. As a result, the BL value for the adversarial example 42 is calculated to be "0.37". In this way, the BL value of "0.37" for the adversarial example 42 is greater than the BL value of "0.06" for the benign example 40. This clearly indicates that the behavior of the decision-making process of the OD model M that becomes unstable in quality of the saliency map 42SM due to the adversarial patch Ad2 can be reflected as an increase in the BL value.

In the case of the adversarial example 43, a complete disappearance attack is accomplished by the adversarial patch Ad3, as illustrated in the saliency map 43SM in FIG. 9. As a result, the objectness score for the entire scene is decreased and no bounding box is obtained. As a result, the BL value for the adversarial example 43 is calculated to be "0.01".

As illustrated in FIGS. 6 to 9, the DiL scores for the examples 40 to 41 can be calculated using the thus calculated CL and BL values. In the DiL scores for the examples 40 to 41, the DiL score "0.08" for the benign example 40 can be calculated as the minimum score. Furthermore, the values "0.21", "0.41" and "1" higher than the DiL score "0.08" for the benign example 40 can be calculated as DiL scores for the adversarial examples 41 to 43. This clearly indicates that it is possible to discriminate between the benign example 40 and the adversarial examples 41 to 43.

Returning to the description of FIG. 3, the abnormality detection unit 15E is a processing unit that detects an abnormality contained in the input scene. According to an embodiment, the abnormality detection unit 15E determines whether the DiL score calculated by the calculation unit 15D exceeds a threshold Th, for example, 0.15. If the DiL score exceeds the threshold Th, the abnormality detection unit 15E determines that there is an abnormality in the input scene x, that is, the input scene x is an adversarial example. On the other hand, if the DiL score does not exceed the threshold Th, the abnormality detection unit 15E determines that there is no abnormality in the input scene x, that is, the input scene x is a benign example.

Here, when an abnormality is detected from the input scene x, the abnormality detection unit 15E can perform a process corresponding to the abnormality. In one aspect, the abnormality detection unit 15E can cause the self-checkout register 30 to output an alert. Examples of the alert include display or audio output of a message to warn of occurrence of partial occlusion or a message to prompt a retry to take a picture of the product. The output destination of the alert is not limited to the self-checkout register 30 and can be a terminal device (not illustrated) used by store personnel. In this case, the alert can be a display or audio output of a message to warn of occurrence of an attack using an adversarial patch, occurrence of partial occlusion, or detection of an object that does not fall into products of the store.

Such a threshold Th can be set based on a training dataset of the OD model M, as an example. For example, the DiL score is calculated from an image of training data, for each piece of training data contained in a training dataset of the OD model M. Then, the threshold Th can be set based on the statistics, for example, the maximum value of the DiL scores of all training data. For example, the maximum DiL score itself or a value obtained by adding a margin $\alpha$, for example, 5% or 10% of the maximum DiL score, to the maximum DiL score can be set as the threshold Th.

The checkout processing unit 15F is a processing unit that executes a process related to the automatic checkout service. In one aspect, if no abnormality is detected by the abnormality detection unit 15E, the checkout processing unit 15F performs image recognition of a product corresponding to an object contained in the input scene to update a shopping list displayed on the self-checkout register 30.

Process Flow

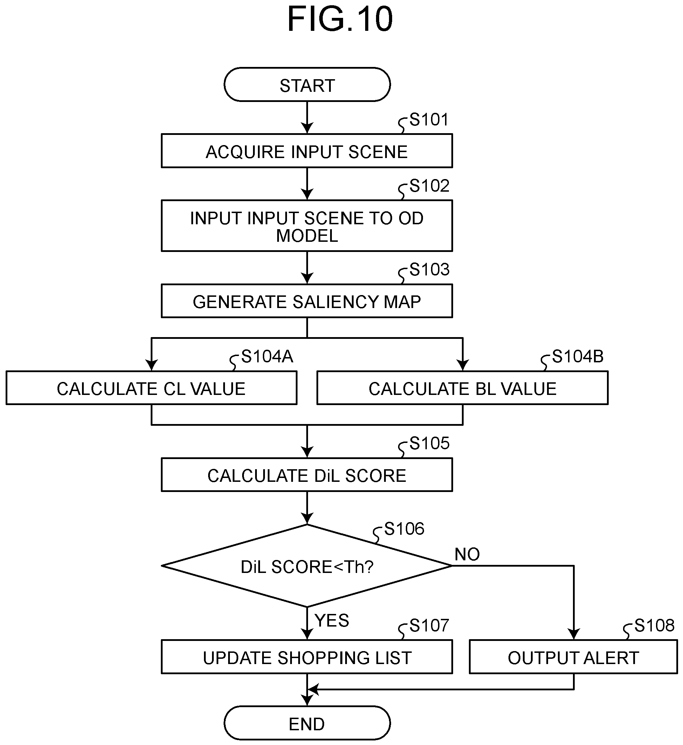

FIG. 10 is a flowchart illustrating an abnormality detection process. This process can be initiated when the input scene x is acquired. As illustrated in FIG. 10, the acquisition unit 15A acquires the input scene x (step S101) .

Subsequently, the object detection unit 15B inputs the input scene x acquired at step S101 to the OD model M (step S102). Thus, the object detection result (prediction result) output by the OD model M is acquired.

Subsequently, the map generation unit 15C generates the saliency map SM(x) corresponding to the input scene acquired at step S101, using the XAI technique (step S103) .

The calculation unit 15D then calculates the CL value that is a localized value of the saliency map SM(x) corresponding to the entire input scene x (step S104A) .

Furthermore, the calculation unit 15D calculates the BL value that is a localized value of the saliency map SM(x) corresponding to the outside of the bounding box output by the OD model M in the input scene x (step S104B) .

The processes at steps S104A and S104B may be executed in any order or may be executed concurrently.

The calculation unit 15D then calculates the DiL score based on the CL value calculated at step S104A and the BL value calculated at step S104B (step S105) .

The abnormality detection unit 15E then determines whether the DiL score calculated at step S105 exceeds the threshold Th, for example, 0.15 (step S106).

Here, if the DiL score does not exceed the threshold Th (Yes at step S106), it is determined that there is no abnormality in the input scene x, that is, the input scene x is a benign example. In this case, the checkout processing unit 15F performs image recognition of a product corresponding to an object contained in the input scene x to update a shopping list displayed on the self-checkout register 30 (step S107) and terminates the process.

On the other hand, if the DiL score exceeds the threshold Th (No at step S106), the abnormality detection unit 15E determines that there is an abnormality in the input scene x. In this case, the abnormality detection unit 15E outputs an alert to any output destination such as the self-checkout register 30 (step S108) and terminates the process.

One Aspect of Effects

As described above, the server device 10 according to the present embodiment detects an abnormality in the input scene x, based on the CL value that is a localized value of the saliency map SM(x) corresponding to the entire input scene x and the BL value that is a localized value of the saliency map SM(x) corresponding to the outside of the bounding box output by the OD model M. Thus, the effect of any type of abnormality on the decision-making process of the OD model M can be quantitatively interpreted. The server device 10 according to the present embodiment therefore can detect any type of abnormality.

Second Embodiment

An embodiment of the present invention has been described above. The present invention may be implemented in various modifications in addition to the embodiment described above.

Numerical Values

The training data, input scene, objects, value of confidence level, and contents and number of image processing used in the above embodiment are only examples and can be changed as desired. The process described in each flowchart can also be modified as appropriate in a consistent manner. Models generated by various algorithms such as neural networks can be employed as the model.

System

The process procedures, control procedures, specific names, and information including various data and parameters referred to in the description and drawings may be changed as desired unless otherwise specified.
The specific forms of distribution and integration of the components of each device are not limited to those depicted in the drawings. For example, the calculation unit 15D may be distributed into units that individually calculate the first, second, and third values. In other words, all or some of the components may be functionally or physically distributed or integrated in arbitrary units, depending on various loads and use conditions.
Furthermore, the processing functions of each device can be entirely or partially implemented by a CPU and a computer program analyzed and executed by the CPU, or by hardware using wired logic.

Hardware

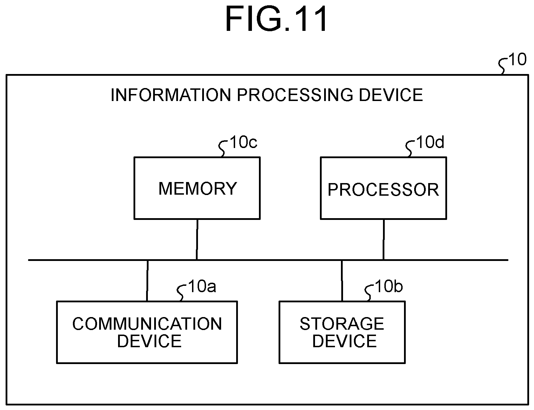

A hardware configuration example of a computer described in the foregoing first embodiment will now be described. FIG. 11 is a diagram illustrating a hardware configuration example. As illustrated in FIG. 11, an information processing device 10 includes a communication device 10a, a storage device 10b, a memory 10c, and a processor 100d. The parts illustrated in FIG. 11 may be connected to each other by buses or other means.
The communication device 100a is a network interface card or the like. The storage device 10b is a storage device such as a hard disk drive (HDD) or a solid state drive (SSD). For example, the storage device 10b stores computer programs and DBs for implementing the functions illustrated in FIG. 3.
A processor 10d operates a process that executes the functions illustrated in FIG. 3 by reading a computer program for executing the same processing as the processing unit illustrated in FIG. 3 from the storage device 10b or the like and loading the computer program into the memory 10c.
Such a process implements the same functions as the processing units of the server device 10. For example, the processor 10d reads, from the storage device 10b or the like, a computer program having the same functions as the acquisition unit 15A, the object detection unit 15B, the map generation unit 15C, the calculation unit 15D, the abnormality detection unit 15E, the checkout processing unit 15F, and the like. The processor 10d then executes a process that executes the same processing as the acquisition unit 15A, the object detection unit 15B, the map generation unit 15C, the calculation unit 15D, the abnormality detection unit 15E, the checkout processing unit 15F, and the like.
In this way, the information processing device 10 operates as an information processing device that executes a calculation method by reading and executing a computer program. Alternatively, the information processing device 10 can read the computer program from a recording medium by a medium reader and execute the read computer program to implement the same functions as the above embodiments. A computer program referred to in other embodiments is not necessarily executed by the information processing device 10. For example, the process illustrated in FIG. 10 can be similarly applied when other computers or servers execute a computer program or when they cooperate to execute a computer program.

The computer program can be distributed via a network such as the Internet. Alternatively, the computer program can be recorded on any recording medium, read from the recording medium, and executed by a computer. For example, the recording medium can be implemented by a hard disk, a flexible disk (FD), a CD-ROM, a magneto-optical disk (MO), a digital versatile disc (DVD), or the like.

Reference Signs List

**Claims**

1. An abnormality detection program that causes a computer (10) to execute a process comprising:

   calculating (S104A, S104B) a first value and a second value, based on a detection result of an object detected from an input scene to an object detection model and a saliency map for the input scene obtained by an XAI technique, the first value indicating a value of the saliency map for the entire input scene, the second value indicating a value of the saliency map in a region other than a region of the detected object in the input scene; and detecting (S106) an abnormality in the input scene based on the calculated first and second values.

2. The abnormality detection program according to claim 1, wherein

   the calculating includes calculating a third value based on the first and second values, and
   the detecting includes detecting an abnormality in the input scene based on the third value.

3. The abnormality detection program according to claim 2, wherein the third value is a deviation of the first and second values.

4. The abnormality detection program according to any one of claims 1 to 3, wherein the XAI technique is an activation-based or gradient-based saliency map output technique.

5. The abnormality detection program according to any one of claims 1 to 4, wherein the process further includes generating (S103) the saliency map for a layer to which non-maximum suppression (NMS) has been applied, in a one-stage type of the object detection model.

6. The abnormality detection program according to any one of claims 1 to 4, wherein the process further includes generating (S103) the saliency map for a final layer of a region proposal network (RPN) component in a two-stage type or multi-stage type of the object detection model.

7. An abnormality detection method carried out by a computer (10), comprising:

   calculating (S104A, S104B) a first value and a second value, based on a detection result of an object detected from an input scene to an object detection model and a saliency map for the input scene obtained by an XAI technique, the first value indicating a value of the saliency map for the entire input scene, the second value indicating a value of the saliency map in a region other than a region of the detected object in the input scene; and detecting (S106) an abnormality in the input scene based on the calculated first and second values.

8. An information processing device (10) comprising:
   a control unit configured to execute a process including:

   calculating (S104A, S104B) a first value and a second value, based on a detection result of an object detected from an input scene to an object detection model and a saliency map for the input scene obtained by an XAI technique, the first value indicating a value of the saliency map for the entire input scene, the second value indicating a value of the saliency map in a region other than a region of the detected object in the input scene; and detecting (S106) an abnormality in the input scene based on the calculated first and second values.

# FIG.1

# FIG.2

·ABNORMALITY WORKS
AS INTENDED BY ATTACKER

$$\frac{\text{SECOND VALUE}}{\text{FIRST VALUE}}$$

INPUT SCENE → OBJECT DETECTION MODEL (M) → [FINAL STAGE] OBJECT DETECTION RESULT

[INTERMEDIATE STAGE] → SALIENCY MAP

$$\frac{\text{SECOND VALUE}}{\text{FIRST VALUE}} \rightarrow \text{ABNORMA-LITY DETECTION RESULT}$$

$$\frac{\text{SECOND VALUE}}{\text{FIRST VALUE}}$$

·WHEN ABNORMALITY
MAKES SALIENCY MAP UNSTABLE
(INCREASE IN OBJECTNESS SCORE IN REGION
OTHER THAN ADVERSARIAL PATCH)

EP 4 614 459 A1

12

# FIG.3

# FIG.4

40

Milk    Milk    Milk

M

OBJECT DETECTION
MODEL
(OD MODEL)

40R

Milk    Milk    Milk

·CLASS AND CONFIDENCE LEVEL OF BB11
·CLASS AND CONFIDENCE LEVEL OF BB12
·CLASS AND CONFIDENCE LEVEL OF BB13

BB11    BB12    BB13

# FIG.5

M

**Two/Multi-Stage Object Detector**

Backbone → RPN → $\sum max$

RPN Output

$\begin{bmatrix} \vdots \\ \vdots \\ \vdots \\ \vdots \end{bmatrix}$

**One-Stage Object Detector**

Model → NMS → $\sum$ Objectness

40

Gradients

Activation

XAI TECHNIQUE

40SM

40R

EP 4 614 459 A1

# FIG.6

EP 4 614 459 A1

# FIG.7

EP 4 614 459 A1

# FIG.8

# FIG.9

# FIG.10

```
                    ┌─────────────────┐
                    │      START      │
                    └─────────────────┘
                             │
                             ▼               ⌐S101
                    ┌─────────────────────────┐
                    │   ACQUIRE INPUT SCENE   │
                    └─────────────────────────┘
                             │
                             ▼               ⌐S102
                    ┌─────────────────────────┐
                    │  INPUT INPUT SCENE TO OD│
                    │         MODEL           │
                    └─────────────────────────┘
                             │
                             ▼               ⌐S103
                    ┌─────────────────────────┐
                    │  GENERATE SALIENCY MAP  │
                    └─────────────────────────┘
```

S101 — ACQUIRE INPUT SCENE

S102 — INPUT INPUT SCENE TO OD MODEL

S103 — GENERATE SALIENCY MAP

S104A — CALCULATE CL VALUE

S104B — CALCULATE BL VALUE

S105 — CALCULATE DiL SCORE

S106 — DiL SCORE<Th?

NO

YES

S107 — UPDATE SHOPPING LIST

S108 — OUTPUT ALERT

END

# FIG.11

INFORMATION PROCESSING DEVICE — 10

MEMORY — 10c

PROCESSOR — 10d

COMMUNICATION DEVICE — 10a

STORAGE DEVICE — 10b

| | Europäisches Patentamt<br>European Patent Office<br>Office européen des brevets | **EUROPEAN SEARCH REPORT** | **Application Number**<br>EP 25 15 4881 |
|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X | SZYC KAMIL ET AL: "Checking Robustness of Representations Learned by Deep Neural Networks",<br>10 September 2021 (2021-09-10), 20210910, PAGE(S) 399 - 414, XP047606693,<br>[retrieved on 2021-09-10]<br>* Section 2 *<br>----- | 1-8 | INV.<br>G06V10/82 |
| L | GILONI AMIT ET AL: "DiL: An Explainable and Practical Metric for Abnormal Uncertainty in Object Detection",<br>2025 IEEE/CVF WINTER CONFERENCE ON APPLICATIONS OF COMPUTER VISION (WACV), IEEE,<br>26 February 2025 (2025-02-26), pages 2507-2516, XP034885388,<br>DOI: 10.1109/WACV61041.2025.00249<br>[retrieved on 2025-04-08]<br>* the whole document *<br>----- | 1-8 | |

| | | | TECHNICAL FIELDS<br>SEARCHED (IPC) |
|---|---|---|---|
| | | | G06V |

The present search report has been drawn up for all claims

| Place of search | Date of completion of the search | Examiner |
|---|---|---|
| The Hague | 7 May 2025 | Grigorescu, Simona |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JI, N.** ; **FENG, Y.** ; **XIE, H.** ; **XIANG, X.** ; **LIU**. Adversarial YOLO: Defense Human Detection Patch Attacks via Detecting Adversarial Patches. *2021, arXiv preprint arXiv: 2103.08860*